# EUROPEAN PATENT APPLICATION

(11) **EP 4 648 531 A1**
(43) Date of publication of application: **12.11.2025**
(21) Application number: 23920304.5
(22) Date of filing: 10.02.2023
(51) Int. Cl.: H04W 74/08

(54) **PROCESSING METHOD, COMMUNICATION DEVICE, AND STORAGE MEDIUM**

(71) Applicant: Shenzhen Transsion Holdings Co., Ltd., Shenzhen, Guangdong 518057 (CN)
(72) Inventor: HUANG, Chiunwei, Shenzhen, Guangdong 518057 (CN)
(74) Representative: Osterhoff, Utz
(86) International application number: PCT/CN2023/075525
(87) International publication number: WO 2024/164336

(57) **Abstract**

The present application provides a processing method, a communication device and a storage medium. The processing method includes: performing, via a terminal device, a first preset processing in response to sending a random access preamble, and determining whether a preset process is completed according to a preset strategy. Through the technical solution of the present application, the terminal device and/or the network device can determine whether random access is completed in the target cell, so as to perform further processing, such as having a corresponding processing flow after determining that the random access is not completed.

## Description

### TECHNICAL FIELD

The present application relates to the technical field of communication, and in particular to a processing method, a communication device and a storage medium.

### BACKGROUND

In the existing specification, in the scenario where the random access triggered by the Physical Downlink Control Channel (PDCCH) order is executed during L1L2 Triggered Mobility (LTM) cell switch and no random access response (RAR) is received, the terminal cannot use the "ra-ResponseWindow" to determine whether the random access is completed, such as whether the preamble sent by the terminal is successfully received by the target cell, whether the terminal successfully receives the response message or feedback information sent by the target cell, and whether the terminal successfully receives the TA information from the base station.

Therefore, during the process of conceiving and implementing the present application, the inventors discovered that: when a terminal device (such as a mobile phone) is unable to determine whether the random access it initiated is completed, it is unable to perform further processing such as re-initiating random access, failure processing, obtaining network device services, etc.; and/or, when a network device (such as a base station) is unable to complete random access with the terminal, it is unable to perform further processing such as executing connection configuration, cell switch, processing, providing services, failure processing, and releasing reserved resources.

The preceding description is intended to provide general background information and does not necessarily constitute prior art.

### SUMMARY

The main purpose of the present application is to provide a processing method, a communication device and a storage medium, so that a terminal device and/or a network device can determine whether random access is completed in a target cell for further processing.

The present application provides a processing method, which can be applied to a terminal device (such as a mobile phone), including the steps:
S20, in response to sending a random access preamble, performing a first preset processing, and determining whether a preset process is completed according to a preset strategy.

Optionally, the first preset processing includes at least one of the following:
starting a random access response window;
starting a time advance acquisition response window;
starting a switch command response window; and
not starting the random access response window.

Optionally, determining whether the preset process is completed according to the preset strategy includes at least one of the following:
in response to that a response message is received within the response window, determining that the preset process is completed;
in response to that the response window times out and no response message is received, determining that the preset process is not completed;
in response to that no response message is received, determining that the preset process is not completed;
in response to that the response message is received, determining that the preset process is completed; and
in response to that a trigger message is received, performing a second preset processing.

Optionally, the response message includes an LTM cell switch command and/or a random access response.

Optionally, the second preset processing includes at least one of the following:
in response to that the trigger message has the same random access preamble and/or random access index as another process being executed, no longer re-initiating the process;
in response to that the trigger message has a different random access preamble and/or synchronization signal fast index than another process being executed, determining that the process is not completed; and
determining that the random access and/or time advance acquisition process is not completed.

Optionally, the method further includes at least one of the following:
the preset process being a random access process, or an LTM cell switch time advance acquisition process, or a time advance acquisition process;
after determining that the preset process is completed, terminating random access preamble transmission in execution;
after determining that the preset process is completed, performing next random access preamble transmission according to a backoff indicator carried by LTM cell switch command; and
after determining that the preset process fails, fallback to perform next random access preamble transmission according to a preconfigured preamble.

The present application further provides a processing method, which can be applied to a network device (such as a base station), including the steps of:
S10, sending random access indication information so that a terminal device sends a random access preamble based on the random access indication information, performs a first preset processing, and determines whether a preset process is completed according to a preset strategy.

Optionally, the first preset processing includes at least one of the following:
starting a random access response window;
starting a time advance acquisition response window;
starting a switch command response window; and
not starting the random access response window.

Optionally, the method further includes sending a response message.

The present application further provides a processing device, including an execution determination module, configured for performing a first preset processing in response to sending a random access preamble, and determining whether the preset process is completed according to a preset strategy.

The present application further provides a processing device, including a sending module, configured for sending random access indication information so that a terminal device sends a random access preamble based on the random access indication information, performs a first preset processing, and determines whether a preset process is completed according to a preset strategy.

The present application also provides a communication device, including: a memory, a processor, and a processing program stored in the memory and executable on the processor, and the processing program implements any of the processing methods described above when executed by the processor. The communication device mentioned in the present application may be a terminal device (such as a smart terminal, such as a mobile phone) or a network device (such as a base station), and the specific reference needs to be clarified in the context.

The present application also provides a storage medium, a computer program is stored in the storage medium, and when the computer program is executed by the processor, the processing method described in any of the above embodiments is implemented.

In technical solutions of the present application, in response to sending the random access preamble, the terminal device performs the first preset processing and determines whether the preset process is completed according to the preset strategy. Through the technical solution of the present application, the terminal device and/or the network device can determine whether the random access is completed in the target cell so as to perform further processing, such as having a corresponding processing flow after determining that the random access is not completed.

### BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.
FIG. 1 is a schematic diagram of hardware structure of a mobile terminal that implements various embodiments of the present application.
FIG. 2 is a communication network system architecture diagram according to an embodiment of the present application.
FIG. 3 is a schematic diagram of hardware structure of a controller 140 involved in the embodiment of the processing method of the present application.
FIG. 4 is a schematic diagram of hardware structure of a network node 150 involved in the embodiment of the processing method of the present application.
FIG. 5 is a schematic diagram of an example LTM cell switch signaling process.
FIG. 6 is a schematic diagram of an interaction process between a terminal device and a network device in a first embodiment of the processing method of the present application.
FIG. 7 is a schematic diagram of the interaction process between the terminal device and the network device in a sixth embodiment of the processing method of the present application.

The realization of the purpose, functional features and advantages of the present application will be further described in conjunction with the embodiments and with reference to the accompanying drawings. The above-mentioned drawings have shown clear embodiments of the present application, which will be described in more detail later. These drawings and textual descriptions are not intended to limit the scope of the concept of the present application in any way, but to illustrate the concept of the present application to those skilled in the art by referring to specific embodiments.

### DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatus and methods consistent with aspects of the present application as detailed in the appended claims.

**It** should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.

**It** should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.

It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least one part of other steps or sub-steps or stages of other steps.

Depending on the context, the words "if" as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".

It should be noted that in this article, step codes such as S10 and S20 are used for the purpose of expressing the corresponding content more clearly and concisely, and do not constitute a substantial limitation on the sequence. When implementing the step, those skilled in the art may execute S20 first and then S10, etc., but these should all be within the scope of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

The communication device mentioned in the present application can be a terminal device (such as a mobile terminal, specifically a mobile phone) or a network device (such as a base station). The specific reference needs to be clarified in the context. The terminal device can be implemented in various forms. For example, the terminal device described in the present application can include a mobile phone, a tablet computer, a notepad computer, a hand-held computer, a personal digital assistants (PDA), a portable media player (PMP), a navigation device, a wearable device, a smart bracelet, a pedometer and other terminal devices, as well as a fixed terminal device such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal device.

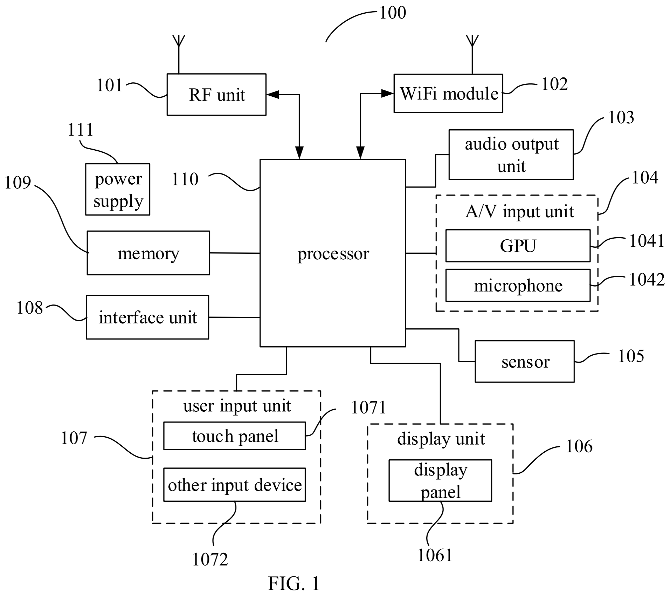

As shown in FIG. 1, FIG. 1 is a schematic structural diagram of a hardware of a mobile terminal that implements various embodiments of the present application. The mobile terminal 100 can include a Radio Frequency (RF) unit 101, a WiFi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), and 5G, or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switch, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated herein.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a highspeed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a Bluetooth module, or the like, which will not be repeated herein.

In order to facilitate the understanding of the embodiments of the present application, the following describes the communication network system on which the mobile terminal of the present application is based.

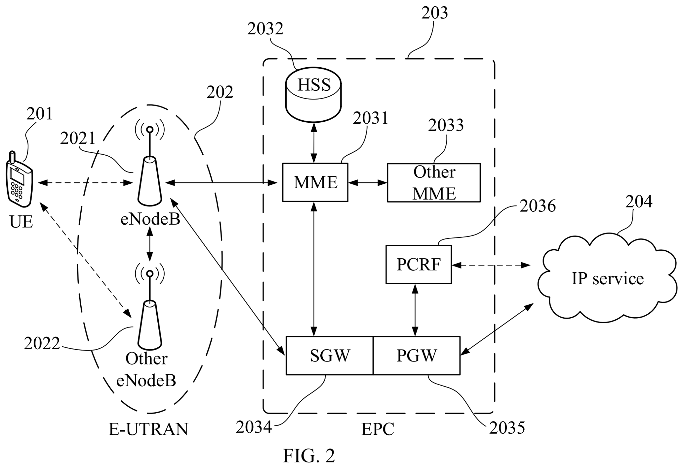

As shown in FIG. 2, FIG. 2 is an architecture diagram of a communication network system according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Optionally, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, 5G and new network systems in the future (such as 6G), or the like, which is not limited herein.

Based on the above-mentioned mobile terminal hardware structure and communication network system, various embodiments of the present application are proposed.

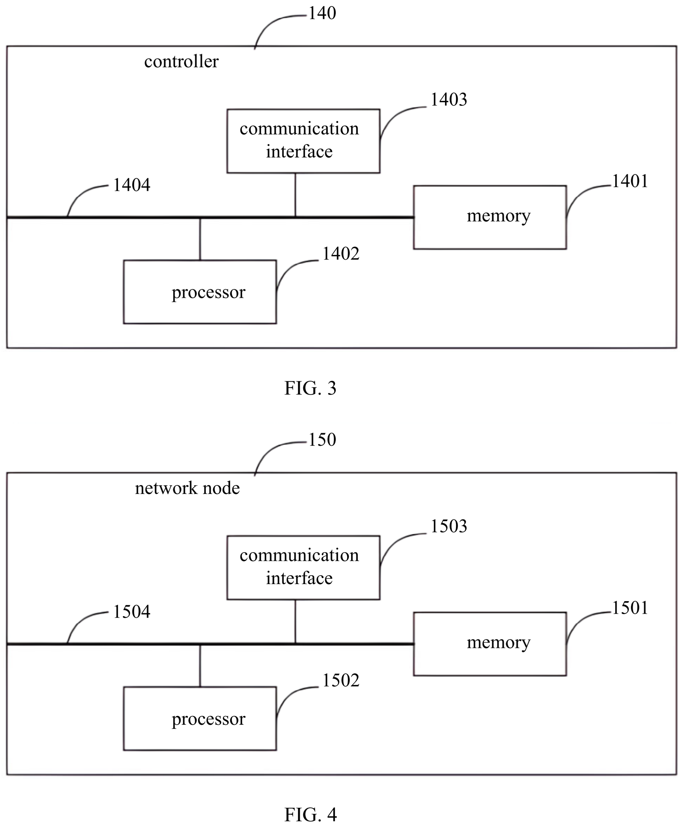

FIG. 3 is a schematic diagram of the hardware structure of a controller 140 provided in the present application. The controller 140 includes a memory 1401 and a processor 1402, the memory 1401 is configured to store program instructions, and the processor 1402 is configured to call the program instructions in the memory 1401 to execute the steps performed by the controller in the first embodiment of the above-mentioned method. The implementation principle and beneficial effects are similar and will not be repeated here.

Optionally, the above-mentioned controller also includes a communication interface 1403, which can be connected to the processor 1402 through a bus 1404. The processor 1402 can control the communication interface 1403 to realize the receiving and sending functions of the controller 140.

FIG. 4 is a schematic diagram of the hardware structure of a network node 150 provided in the present application. The network node 150 includes a memory 1501 and a processor 1502. The memory 1501 is configured to store program instructions, and the processor 1502 is configured to call the program instructions in the memory 1501 to execute the steps performed by the first node in the first embodiment of the above method. The implementation principle and beneficial effects are similar and will not be repeated here.

Optionally, the above controller also includes a communication interface 1503, which can be connected to the processor 1502 through a bus 1504. The processor 1502 can control the communication interface 1503 to implement the receiving and sending functions of the network node 150.

The above-mentioned integrated module implemented in the form of a software function module can be stored in a computer-readable storage medium. The above-mentioned software function module is stored in a storage medium, including several instructions for enabling a computer device (which can be a personal computer, a server, or a network device, etc.) or a processor to perform some steps of the methods of various embodiments of the present application.

Technical terms involved in this embodiment are as follows.
DCI, Downlink Control Information
LTM, L1L2 Triggered Mobility
MAC CE, Medium Access Control Control Element
Preamble
PUSCH, Physical uplink shared channel
RA, Random Access
RACH, Physical random access channel
RAR, Random Access Response
Slot
TA, Timing advance
UCI, Uplink Control Information
URLLC, Ultra Reliable Low Latency Communications

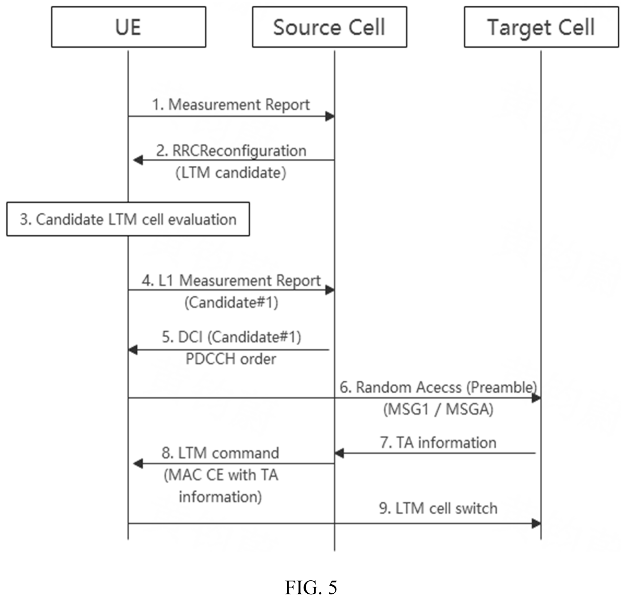

Referring to FIG. 5, FIG. 5 is a schematic diagram of an example LTM cell switch signaling process.

As shown in FIG. 5, an LTM cell switch signaling process may include the following steps:
1. The user equipment (UE) sends a measurement report to a source cell;
2. The source cell configures at least one candidate LTM cell, and the configuration content may include at least one of the following: LTM cell index, LTM cell reference configuration, LTM cell delta configuration, measurement configuration, random access parameters;
3. The terminal device performs measurement and evaluation based on the configured at least one candidate LTM cell measurement configuration;
4. If a candidate LTM cell meets the measurement conditions, a measurement report (L1 Measurement Report) is reported through L1 (Layer 1), which may carry the index information or identification information of the candidate LTM cell that meets the measurement report. Optionally, the L1 measurement report can be sent through MAC CE and/or UCl;
5. The network device (such as the base station) sends downlink control information (DCI) to trigger (PDCCH order) random access, so that the terminal device initiates a random access process to the target LTM cell;
6. The terminal device sends a random access preamble to the target LTM cell;
7. The target LTM cell provides TA information to the source cell. Optionally, the information provided also includes uplink scheduling (UL Grant);
8. The source cell sends an LTM cell switch command and carries the target LTM cell TA information and/or target LTM cell index. Optionally, the LTM cell switch command is sent via MAC CE. The LTM cell switch command may also carry the target LTM cell uplink scheduling (UL Grant) information. The TA information and/or uplink scheduling information are provided by the target LTM cell.
9. The terminal device applies the reference configuration according to the LTM cell switch command, then applies the differential configuration according to the index, and performs LTM cell switch to the target cell according to the TA information. Optionally, the terminal implements RACH-Less switching to the target cell according to the TA information and/or uplink scheduling information carried by the LTM cell switch command.

From the above process, it can be seen that before executing the switch, the terminal device obtains the TA information between the target cell in advance. During the switch process, there is no need to disconnect from the source cell and then perform random access with the target cell to obtain TA information. Instead, it maintains the connection with the source cell and implements random access with the target cell in advance. After receiving the LTM cell switch command, it directly implements the cell switch with the target cell to avoid service interruption.

Through the technical solution of the present application, the terminal device and/or the network device can determine whether the random access is completed in the target cell, and after determining that the random access is unsuccessful, a corresponding processing flow can be performed.

### First embodiment

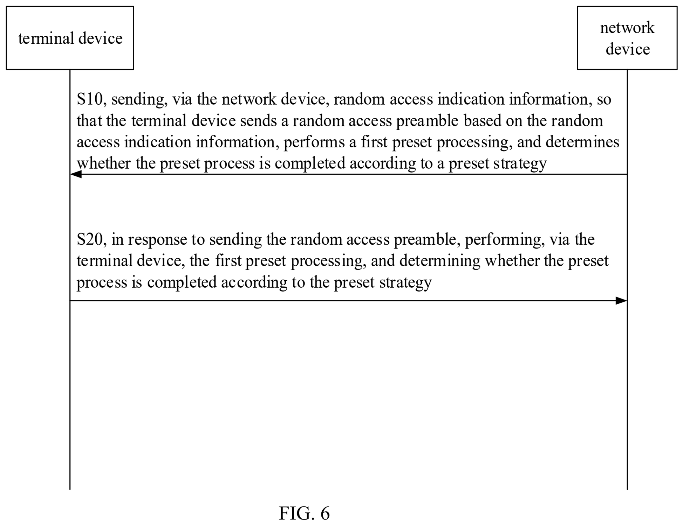

As shown in FIG. 6, the first embodiment of the present application provides a processing method, including the following steps:
S10, sending, via a network device, random access indication information, so that the terminal device sends a random access preamble based on the random access indication information, performs a first preset processing, and determines whether the preset process is completed according to a preset strategy.
S20, in response to sending the random access preamble, performing, via the terminal device, the first preset processing, and determining whether the preset process is completed according to the preset strategy.

Optionally, the first preset processing includes at least one of the following:
starting a random access response window;
starting a time advance acquisition response window;
starting a switch command response window; and
not starting the random access response window.

Optionally, determining whether the preset process is completed according to the preset strategy includes at least one of the following:
if a response message is received within the response window, determining that the preset process is completed;
if the response window times out and no response message is received, determining that the preset process is not completed;
if no response message is received, determining that the preset process is not completed;
if the response message is received, determining that the preset process is completed; and
if a trigger message is received, performing a second preset processing.

Optionally, the time advance acquisition response window includes at least one of a timer and a time length.

Optionally, the response message includes at least one of an LTM cell switch command and a random access response.

Optionally, the trigger message includes random access triggered by a PDCCH order.

Optionally, the second preset processing includes at least one of the following:
when the trigger message has the same random access preamble and/or random access index as another process being executed, no longer re-initiating the process;
when the trigger message has a different random access preamble and/or synchronization signal fast index than another process being executed, determining that the process is not completed; and
determining that the random access and/or time advance acquisition process is not completed.

Optionally, the LTM cell switch command is sent through the source cell.

Optionally, the preset process is a random access process, or an LTM cell switch time advance acquisition process, or a time advance acquisition process, which is not limited here.

Optionally, after determining that the preset process is completed, the execution of the random access preamble transmission is terminated.

Optionally, after determining that the preset process is completed, the next random access preamble transmission is performed according to the backoff indicator carried by the LTM cell switch command.

Optionally, after determining that the preset process fails, fallback to perform the next random access preamble transmission according to the preconfigured preamble.

Optionally, the method further includes the step:
sending, via the network device, a response message.

In the technical solution of the present application, the terminal device performs a first preset processing in response to sending a random access preamble, and determines whether the preset process is completed according to the preset strategy. Through the technical solution of the present application, the terminal device and/or the network device can determine whether the random access is completed in the target cell, so as to perform further processing, such as having a corresponding processing flow after determining that the random access is not completed.

### Second embodiment

Based on the above embodiments, the second embodiment of the present application provides a processing method, which confirms whether the random access process is successful through the LTM cell switch response window and whether the LTM command is received.

In this embodiment, the terminal device performs a first preset processing in response to sending a random access preamble, and determines whether the preset process is completed according to a preset strategy.

Optionally, the first preset processing includes: starting the LTM cell switch response window.

In this embodiment, a new receiving time window, namely the LTM cell switch response window "Itm-ReceiveWindow", is introduced: after the terminal device receives the random access command triggered by the PDCCH order of the source cell, a random access preamble is sent to the target candidate cell, and it is determined whether the LTM cell switch command is received within the "Itm-ReceiveWindow". If the LTM cell switch command is received within the "Itm-ReceiveWindow" response window, the preset process is deemed to be successful, that is, completed; and/or, if the LTM cell switch command is not received within the "Itm-ReceiveWindow" response window, the random access is deemed to have failed, that is, not completed.

Optionally, the LTM cell switch command is sent through the source cell.

Optionally, after the preset process succeeds, the terminal device terminates the random access preamble transmission in execution.

Optionally, if the terminal device receives the LTM cell switch command outside the "Itm-ReceiveWindow" response window, it is deemed that the random access has failed.

Optionally, after the random access fails, the terminal device performs the next random access preamble transmission according to the preconfiguration information.

Optionally, the preconfiguration information includes Backoff Indicator (BI), and the terminal device postpones the next random access preamble transmission according to the BI.

Optionally, the LTM cell switch command received by the terminal device carries the backoff indicator, and the terminal device performs the next random access preamble transmission according to the backoff indicator.

Optionally, taking the network device as a base station as an example, the base station configures the LTM cell switch response window "Itm-ReceiveWindow" and the corresponding candidate LTM cell preconfiguration and measurement configuration by preconfiguration (refer to step 2 in the LTM cell switch signaling process shown in FIG. 5).

The terminal device measures the candidate LTM cell through the measurement configuration and evaluates whether the measurement reporting conditions are met. When a candidate LTM cell meets the reporting conditions, the terminal device reports the measurement report through L1 (L1 Measurement Report).

Optionally, the L1 measurement report is reported through MAC CE and/or UCI, and the content of the L1 measurement report includes at least one of the following: target cell identification, measurement report identification, signal strength (RSRP, Reference Signal Received Power), signal quality (RSRQ, Reference Signal Received Quality), and signal-to-noise ratio (SINR, signal-to-noise and interference ratio).

After receiving the measurement report reported by the terminal device, the base station determines to execute LTM cell switch, and sends PDCCH order and/or target cell identification through DCI to trigger the terminal (in advance) to perform random access with the target cell.

The terminal device receives the downlink control information sent by the source cell (refer to step 5 in the LTM cell switch signaling process shown in FIG. 5). The downlink control information carries the target candidate cell index. The terminal device obtains the corresponding random access configuration parameters according to the index, sends a random access preamble to the target candidate cell, starts the LTM cell switch response window, and monitors PDCCH on the source cell.

When the terminal device receives the LTM cell switch command within the LTM cell switch response window, it is considered that the random access is successful. If the LTM cell switch command also carries the target candidate cell TA, it can be considered that the random access is successful or the TA acquisition is successful; and/or, when the terminal device receives the LTM cell switch command outside the random access preamble response window or does not receive the LTM cell switch command or receives the random access process triggered by the base station sending the PDCCH order through DCI again, it is considered that the random access is unsuccessful or the TA acquisition process is unsuccessful.

Optionally, when the terminal device successfully obtains the TA value of the target candidate cell, the cell is switched to the target candidate cell according to the configuration parameters of the target candidate cell.

Optionally, the terminal device implements RACH-Less switching to the target cell according to the TA value obtained for the target candidate cell, and achieves uplink synchronization (UL synchronization) with the target cell in advance.

Optionally, the terminal device receives the LTM cell switch command also carrying the uplink scheduling (UL Grant). After executing the switch to the target cell, the uplink data is sent according to the uplink scheduling, and there is no need to resend the scheduling request (SR) to request uplink transmit resources, thereby reducing data transmission and improving user experience.

Optionally, the terminal device receives an LTM cell switch command including TA information and uplink scheduling information. The terminal device can implement RACH-Less switching to the target cell according to the TA information, and directly send uplink data in the target cell through the uplink scheduling information, thereby speeding up the cell switch process and/or reducing transmission interruption caused by switching, thereby improving user experience.

Optionally, when the random access process is unsuccessful, the terminal device directly executes the next random access preamble transmission.

Optionally, the preset process can be a random access process, or an LTM cell switch time advance acquisition process, or a TA acquisition process, which is not limited here.

Optionally, when the terminal device receives the LTM cell switch command and/or the target cell TA value within the response window, the random access being sent is stopped (such as the random access preamble is still being sent).

Optionally, the LTM cell switch command also includes a target cell index, and the terminal device applies the target cell configuration according to the index.

Optionally, the configuration includes a reference configuration and/or a delta configuration.

Optionally, the candidate LTM cell configuration is determined by the reference configuration and/or delta configuration in step 2 of the LTM cell switch signaling process shown in FIG. 5.

Optionally, the terminal device sends the random access preamble through the "random access parameter" configuration in step 2 of the LTM cell switch signaling process shown in FIG. 5.

Optionally, the terminal device determines the random access preamble sending timing (Random Access Occasion, RO) according to the random access parameters and/or determines the random access preamble to be sent according to the random access parameters.

Optionally, the terminal device determines the random access preamble and/or RO to be sent according to the random access preamble and/or random access mask index (PRACH mask index) carried by the DCI in the via the PDCCH order triggered random access.

Optionally, the length of the random access preamble response window is a multiple of the slot length, for example: 1 slot, 2 slots, 4 slots, 8 slots, etc.

Optionally, when the random access process is unsuccessful, the terminal device does not perform any action or performs the next random access preamble transmission.

Optionally, the preconfiguration (refer to step 2 in the LTM cell switch signaling process shown in FIG. 5) also includes a backoff indicator. After sending the random access preamble, the terminal device delays the next random access preamble transmission according to the time of the backoff indicator.

Optionally, when the terminal device receives a backoff indicator carried in the LTM cell switch command in the random access response window, the next random access preamble transmission is delayed according to the time of the backoff indicator.

In technical solutions of this embodiment, the terminal device starts the LTM cell switch response window in response to sending the random access preamble. Thus, by introducing a new receiving time window, i.e., the LTM cell switch response window "Itm-ReceiveWindow", the terminal device sends the random access preamble to the target candidate cell after receiving the PDCCH order triggered by the source cell, and determines whether the LTM cell switch command is received within the "Itm-ReceiveWindow". If the LTM cell switch command is received within the "Itm-ReceiveWindow" response window, it is deemed that the preset process is successful, and/or, if the LTM cell switch command is not received within the "Itm-ReceiveWindow" response window, it is deemed that the random access fails. Through the technical solution of the present application, the terminal device and/or the network device can determine whether the random access is completed in the target cell, so as to perform further processing, such as having a corresponding processing flow after determining that the random access is not completed.

### Third embodiment

Based on the above embodiments, the third embodiment of the present application provides a processing method to confirm whether the random access process is successful through the random access response window and whether the LTM command is received.

This embodiment is based on the second embodiment, and the difference is that the response window uses the existing technology "ra-ResponseWindow", that is, the response window in the second embodiment above: "Itm-ReceiveWindow" is replaced by "ra-ResponseWindow".

Optionally, based on the existing response window "ra-ResponseWindow", the implementation scheme is as follows:

After the terminal device receives the random access triggered by the source cell through the PDCCH order, it sends a random access preamble to the target candidate cell, and determines whether the LTM cell switch command is received wthin the "ra-ResponseWindow" response window. If the LTM cell switch command is not received within the "ra-ResponseWindow" response window, it is considered that the random access failed.

Optionally, the LTM cell switch command is sent through the source cell.

Optionally, after the random access fails, the terminal device performs the next random access preamble transmission according to the preconfiguration information.

Optionally, the preconfiguration information includes Backoff Indicator (BI), and the terminal device delays the next random access preamble transmission according to the BI.

Optionally, the LTM cell switch command received by the terminal device carries the backoff indicator, and the terminal device performs the next random access preamble transmission according to the backoff indicator.

In technical solutions of this embodiment, in response to sending a random access preamble, the terminal device starts a random access response window "ra-ResponseWindow". Thus, through the random access response window "ra-ResponseWindow", after the terminal device receives a random access command triggered by the source cell through the PDCCH order, it sends a random access preamble to the target candidate cell, and determines whether an LTM cell switch command is received within the "ra-ResponseWindow" response window. If no LTM cell switch command is received within the "ra-ResponseWindow" response window, it is considered that the random access fails. Through the technical solution of the present application, the terminal device and/or the network device can determine whether the random access is completed in the target cell, so as to perform further processing, such as having a corresponding processing flow after determining that the random access is not completed.

### Fourth embodiment

Based on the above embodiments, the fourth embodiment of the present application provides a processing method, which confirms whether the random access process is successful by time advance acquisition response window and whether the LTM command is received.

Optionally, the response window is the timer "Itm-TAacquisitionTimer".

Optionally, the response window can also be a newly introduced timer, random access response and/or advance acquisition timer "TAacquisitionTimer".

After the terminal device receives the random access command triggered by the source cell through the PDCCH order, it sends a random access preamble to the target candidate cell, and determines whether the LTM cell switch command is received within the "TAacquisitionTimer". If the LTM cell switch command is not received within the "TAacquisitionTimer" time window, it is considered that the random access fails.

Optionally, TAacquisitionTimer uses the existing "TimeAlignmentTimer" time step and/or configuration.

Optionally, after the random access fails, the terminal device performs the next random access preamble transmission according to the pre-configured information.

Optionally, the preconfiguration information includes a Backoff Indicator (BI), and the terminal device delays the next random access preamble transmission according to the BI.

Optionally, the LTM cell switch command received by the terminal device carries a backoff indicator, and the terminal device performs the next random access preamble transmission according to the backoff indicator.

Optionally, the timer is used to determine whether the LTM cell switch random access is successful: when the terminal device receives the LTM cell switch command within the response window and carries the target candidate cell TA, it is deemed that the random access is successful or the TA is acquired successfully; and/or, when the terminal device receives the LTM cell switch command outside the response time window or does not receive the LTM cell switch command, it is deemed that the random access is unsuccessful or the TA is acquired unsuccessfully.

Optionally, the terminal device implements RACH-Less switching to the target cell according to the TA value obtained by the target candidate cell, and realizes uplink synchronization (UL synchronization) with the target cell in advance.

Optionally, the terminal device receives the LTM cell switch command also carrying the uplink grant. After executing the switch to the target cell, the uplink data is sent according to the uplink grant, and there is no need to resend the scheduling request (SR) to request uplink transmit resources, thereby reducing data transmission and improving user experience.

Optionally, the terminal device receives the LTM cell switch command containing TA information and uplink scheduling information. The terminal device can implement RACH-Less switch to the target cell according to the TA information, and directly send uplink data in the target cell through the uplink scheduling information, thereby speeding up the cell switch process and/or reducing the transmission interruption caused by the switch, thereby improving user experience.

Optionally, the timer length can be a fixed value, for example: 0.015625ms, 0.03125ms, ..., 80ms, etc., which is not limited here.

Optionally, when the random access process is unsuccessful, the terminal device does not perform any action, or performs the next random access preamble transmission, or performs the next random access preamble transmission according to the backoff indicator.

Optionally, the preconfiguration (refer to step 2 in the LTM cell switch signaling process shown in FIG. 5) also includes a backoff indicator, and the terminal device delays the next random access preamble transmission according to the time of the backoff indicator after sending the random access preamble.

Optionally, when the terminal device receives the LTM cell switch command carrying the backoff indicator in the random access response window, the next random access preamble transmission is delayed according to the time of the backoff indicator.

In technical solutions of this embodiment, in response to sending the random access preamble, the terminal device starts the time advance acquisition response window "TAacquisitionTimer". Thus, through the time advance acquisition response window "TAacquisitionTimer", after the terminal device receives the random access triggered by the source cell through the PDCCH order, the random access preamble is sent to the target candidate cell, and it is determined whether the LTM cell switch command is received within "TAacquisitionTimer". If the LTM cell switch command is not received within the "TAacquisitionTimer" time window, it is considered that the random access has failed. Through the technical solution of the present application, the terminal device and/or the network device can determine whether the random access is completed in the target cell, so as to perform further processing, such as having a corresponding processing flow after determining that the random access is not completed.

### Fifth embodiment

Based on the above embodiments, the fourth embodiment of the present application provides a processing method to confirm whether the random access process is successful by not starting the random access response window and whether the LTM command is received.

Optionally, a solution of not starting the "ra-ResponseWindow" and directly receiving the LTM cell switch command is adopted.

In this embodiment, based on the existing "ra-ResponseWindow": after the terminal device receives the random access command triggered by the source cell through the PDCCH order, the random access preamble is sent to the target candidate cell, and the "ra-ResponseWindow" response window is not started. If the terminal device does not receive the LTM cell switch command, it does not perform any action or wait for the next network device to trigger the PDCCH order random access.

Taking the network device as a base station as an example, the base station configures the candidate LTM cell preconfiguration and measurement configuration by preconfiguration (refer to step 2 in the LTM cell switch signaling process shown in FIG. 5).

The terminal device measures the candidate LTM cell through the measurement configuration and evaluates whether the measurement reporting conditions are met. When a candidate LTM cell meets the reporting conditions, the terminal device reports the measurement report through L1 (L1 Measurement Report).

After receiving the measurement report reported by the terminal device, the base station determines to execute LTM cell switch and sends PDCCH order and/or target cell identification through DCI to trigger the terminal (in advance) to perform random access with the target cell.

The terminal device receives the downlink control information sent by the source cell (refer to step 5 in the LTM cell switch signaling process shown in FIG. 5). The downlink control information carries the target candidate cell index. The terminal device obtains the corresponding random access configuration parameters according to the index, and sends a random access preamble to the target candidate cell, does not start the response time window "ra-ResponseWindow", and monitors PDCCH on the source cell.

When the terminal device receives the LTM cell switch command in the source cell, it is considered that the random access is successful. If the LTM cell switch command also carries the target candidate cell TA, it is considered that the random access is successful or the TA acquisition is successful; and/or, when the terminal device does not receive the LTM cell switch command, or receives the PDCCH order sent by the base station through DCI again to trigger the random access process, it is considered that the random access is unsuccessful or the TA acquisition process is unsuccessful.

Optionally, the terminal device obtains the TA value of the target candidate cell and implements RACH-Less switch to the target cell according to the TA value, thereby achieving uplink synchronization (UL synchronization) with the target cell in advance.

Optionally, the terminal device receives the LTM cell switch command also carrying the uplink grant. After executing the switch to the target cell, the terminal device sends uplink data according to the uplink grant, and does not need to resend the scheduling request (SR) to request uplink transmission resources, thereby reducing data transmission and improving user experience.

Optionally, the terminal device receives an LTM cell switch command including TA information and uplink scheduling information. The terminal device can implement RACH-Less switching to the target cell based on the TA information, and directly send uplink data in the target cell through the uplink scheduling information, thereby speeding up the cell switch process and/or reducing transmission interruptions caused by switching, thereby improving user experience.

Optionally, after the random access is unsuccessful or the TA acquisition process is unsuccessful, the random access preamble and/or random access mask index (PRACH mask index) issued by the PDCCH order are further determined. If they are the same as those used in the ongoing random access process, it is regarded as a repeated trigger and no further execution is performed; and/or, if they are different from those used in the ongoing random access process, the current random access process is terminated, and random access is initiated according to the new random access preamble and/or PRACH mask index.

Optionally, the terminal device sends the next random access preamble according to the preamble transmission window (ra-TransmiteWindow) interval.

Optionally, when the terminal device successfully obtains the TA value of the target candidate cell, the target candidate cell is switched according to the cell switch value of the target candidate cell configuration parameter.

Optionally, the preamble transmission window is provided and/or obtained by preconfiguration.

Optionally, the LTM cell switch command also includes a target cell index, and the terminal device applies the target cell configuration according to the index.

Optionally, the configuration includes a reference configuration and/or a delta configuration.

Optionally, the candidate LTM cell configuration is determined by the reference configuration and/or delta configuration in step 2 of the LTM cell switch signaling process shown in FIG. 5.

Optionally, the terminal device sends the random access preamble through the "Random Access Parameters" configuration in step 2 of the LTM cell switch signaling process shown in FIG. 5.

Optionally, the terminal device determines a random access preamble sending occasion (Random Access Occasion, RO) according to the random access parameters and/or determines a random access preamble to be sent according to the random access parameters.

Optionally, the terminal device determines the random access preamble and/or RO to be sent based on the random access preamble and/or random access mask index (PRACH mask index) carried by the DCI in the random access via the PDCCH order.

Optionally, when the random access process is unsuccessful, the terminal device does not perform any action, or directly performs the next random access preamble transmission, or performs the next random access preamble transmission after a fixed delay.

Optionally, the preconfiguration (refer to step 2 in the LTM cell switch signaling process shown in FIG. 5) also includes a backoff indicator, and the terminal device delays the next random access preamble transmission according to the time of the backoff indicator after sending the random access preamble.

Optionally, when the terminal device receives a backoff indicator carried in the LTM cell switch command in the random access response window, the next random access preamble transmission is delayed according to the time of the backoff indicator.

In technical solutions of this embodiment, in response to sending a random access preamble, the terminal device adopts a scheme of not starting the random access response window and confirming whether the random access process is successful by whether the LTM command is received. After the terminal device receives the PDCCH order triggered by the source cell, the random access preamble is sent to the target candidate cell, and the "ra-ResponseWindow" response window is not started. If the terminal does not receive the LTM cell switch command, it does not perform any action or wait for the next network device to trigger random access through the PDCCH order. Through the technical solution of the present application, the terminal device and/or the network device can determine whether the random access is completed in the target cell, so as to perform further processing, such as having a corresponding processing flow after determining that the random access is not completed.

### Sixth embodiment

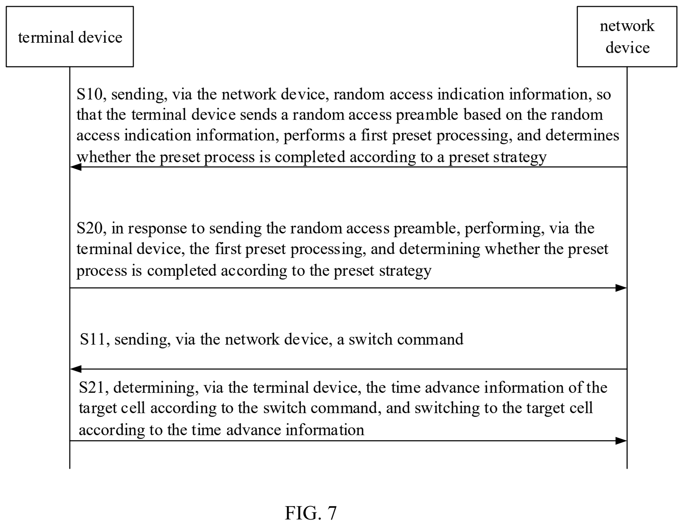

As shown in FIG. 7, the sixth embodiment of the present application provides a processing method, including the following steps:
S11, sending, via a network device, a switch command so that the terminal device determines the time advance information of the target cell according to the switch command, and switching to the target cell according to the time advance information.
S21, determining, via a terminal device, the time advance information of the target cell according to the switch command, and switching to the target cell according to the time advance information.

Optionally, the switch command is sent by the network device in response to the random access preamble.

Optionally, the terminal device receives the switch command within the random access response window.

Optionally, the terminal device receives the switch command within the time advance acquisition response window.

Optionally, the terminal device terminates the random access preamble transmission in execution.

Optionally, the terminal device performs the next random access preamble transmission according to the backoff indicator carried by the switch command.

Optionally, the terminal device receives an LTM cell switch command sent by the source cell (refer to step 8 in the LTM cell switch signaling process shown in FIG. 5), and the terminal device accesses the target cell according to the TA information carried in the command. Optionally, the TA information is calculated by the target cell in response to the random access preamble sent by the terminal device, and the terminal device monitors the LTM cell switch command according to the response window configured by the network device.

Optionally, the LTM cell switch command also includes a target cell index, and the terminal device applies the target cell configuration according to the index.

Optionally, the configuration includes a reference configuration and/or a delta configuration.

Optionally, the response time window "Itm-ReceiveWindow" or "ra-ResponseWindow" is configured by step 2 "Random Access Parameters" in the LTM cell switch signaling process shown in FIG. 5.

Optionally, the candidate LTM cell configuration is determined by step 2 reference configuration and/or difference configuration in the LTM cell switch signaling process shown in FIG. 5.

Optionally, the terminal device sends the random access preamble according to "Random Access Parameters" configuration in step 2 of the LTM cell switch signaling procedure shown in FIG. 5.

Optionally, the response time window length is a multiple of the slot length, for example: 1 slot, 2 slots, 4 slots, 8 slots, etc.

Optionally, the response time window is a timer, and the timer length can be a fixed value, for example: 500ms, 750ms, 1280ms, etc.

Optionally, the LTM cell switch command is sent via MAC CE.

Optionally, after receiving the LTM cell switch command, the terminal device terminates the executing random access preamble transmission, or terminates the executing random access preamble transmission before switching to the target cell.

Optionally, the preconfiguration (refer to step 2 in the LTM cell switch signaling process shown in FIG. 5) also includes a backoff indicator. After sending the random access preamble, the terminal device delays the next random access preamble transmission according to the time of the backoff indicator.

In technical solutions of this embodiment, the network device provides the TA information of the target cell in advance, so that the terminal device directly switches to the target cell through the TA information, thereby avoiding the service interruption during the switching process and affecting the user experience.

Optionally, the terminal device implements RACH-Less switching to the target cell through the obtained TA information and/or directly switches to the target cell according to the obtained TA value to send and/or receive data.

Optionally, the terminal device performs a first preset processing in response to sending a random access preamble, and determines whether the preset process is completed according to the preset strategy; the network device sends a switch command, and the terminal device determines the target cell time advance information according to the switch command, and switches to the target cell according to the time advance information.

Through the technical solution of the present application, the terminal device and/or the network device can determine whether the random access is completed in the target cell, so as to perform further processing, such as having a corresponding processing flow after determining that the random access is not completed.

The embodiment of the present application also provides a processing device, which is applied to a terminal device or is a terminal device, and the device includes an execution determination module, configured for performing a first preset processing in response to sending a random access preamble, and determining whether the preset process is completed according to a preset strategy.

Optionally, the first preset processing includes at least one of the following:
starting a random access response window;
starting a time advance acquisition response window;
starting a switch command response window;
not starting the random access response window.

Optionally, determining whether the preset process is completed according to the preset strategy includes at least one of the following:
in response to that a response message is received within the response window, determining that the preset process is completed;
in response to that the response window times out and no response message is received, determining that the preset process is not completed;
in response to that no response message is received, determining that the preset process is not completed;
in response to that the response message is received, determining that the preset process is completed; and
in response to that a trigger message is received, performing a second preset processing.

Optionally, the trigger message includes PDCCH order triggered random access.

Optionally, the response message includes LTM cell switch command and/or random access response; and/or, the second preset processing includes at least one of the following:
when the trigger message has the same random access preamble and/or random access index as another process being executed, no longer re-initiating the process;
when the trigger message has a different random access preamble and/or synchronization signal fast index than another process being executed, determining that the process is not completed; and
determining that the random access and/or time advance acquisition process is not completed.

Optionally, the device further includes at least one of the following:
the preset process being a random access process, or an LTM cell switch time advance acquisition process, or a time advance acquisition process;
after determining that the preset process is completed, terminating random access preamble transmission in execution;
after determining that the preset process is completed, performing next random access preamble transmission according to a backoff indicator carried by LTM cell switch command; and
after determining that the preset process fails, fallback to perform next random access preamble transmission according to a preconfigured preamble.

The present application also provides a processing device, which is applied to a network device or is a network device. The device include a sending module, configured for sending random access indication information so that a terminal device sends a random access preamble based on the random access indication information, performs a first preset processing, and determines whether a preset process is completed according to a preset strategy.

Optionally, the first preset processing includes at least one of the following:
starting a random access response window;
starting a time advance acquisition response window;
starting a switch command response window; and
not starting the random access response window.

Optionally, the sending module is further configured for sending a response message.

The embodiment of the present application also provides a communication system, including the terminal device described in any of the above embodiments, and the network device described in any of the above embodiments.

The embodiment of the present application also provides a communication device, including: a memory, a processor, and a processing program stored in the memory and executable on the processor, and the processing program is executed by the processor to implement the processing method described in any of the above embodiments. The communication device mentioned in the present application can be a terminal device (such as a smart terminal, such as a mobile phone) or a network device (such as a base station). The specific reference needs to be clarified in combination with the context.

The embodiment of the present application also provides a storage medium, a processing program is stored in the storage medium, and when the processing program is executed by the processor, the steps of the processing method in any of the above embodiments are implemented.

In the embodiment of the smart terminal and the storage medium provided in the present application, all technical features of any of the above-mentioned image processing method embodiments may be included, and the expansion and explanation content of the specification are basically the same as the embodiments of the above-mentioned methods, and will not be repeated here.

The embodiment of the present application also provides a computer program product, which includes a computer program code, and when the computer program code is run on a computer, the computer executes the method in the above-mentioned various possible implementations.

The embodiments of the present application further provide a chip, including a memory and a processor, the memory is configured to store a computer program, and the processor is configured to call and run the computer program from the memory, so that the device equipped with the chip executes the method in the above-mentioned various possible implementations.

**It** can be understood that the above-mentioned scenarios are only examples and do not constitute a limitation on the application scenarios of the technical solutions provided in the embodiments of the present application. The technical solutions of the present application can also be applied to other scenarios. For example, it is known to ordinary technicians in the field that with the evolution of the system architecture and the emergence of new business scenarios, the technical solutions provided in the embodiments of the present application are also applicable to similar technical problems.

The serial numbers of the embodiments of the present application are for description only and do not represent the advantages and disadvantages of the embodiments.

The steps in the method of the embodiment of the present application can be adjusted in order, merged and deleted according to actual needs.

The units in the device of the embodiment of the present application can be merged, divided and deleted according to actual needs.

In the present application, the same or similar terminology, technical solution and/or application scenario description is generally described in detail only when it appears for the first time. When it appears again later, it is generally not repeated for the sake of brevity. When understanding the technical solution and other contents of the present application, for the same or similar terminology, technical solution and/or application scenario description that is not described in detail later, please refer to the previous related detailed description.

In this application, the descriptions of various embodiments have different focuses. For parts that are not described or recorded in a certain embodiment, please refer to the relevant descriptions of other embodiments.

The various technical features of the technical solution of the present application can be combined arbitrarily. In order to make the description concise, all possible combinations of the various technical features in the above embodiments are not described. However, as long as there is no contradiction in the combination of these technical features, they should be considered to be within the scope of the present application.

Through the above description of the implementation, those skilled in the art can clearly understand that the above embodiment methods can be implemented by software plus the necessary general hardware platform, or by hardware, but in many cases the former is a better implementation. Based on this understanding, the technical solution of the present application essentially or the part that contributes to the existing technology can be embodied in the form of a software product, and the computer software product is stored in one of the above storage media (such as ROM/RAM, disk, optical disk), including several instructions to cause a terminal device (which can be a mobile phone, a computer, a server, a controlled terminal, or a network device, etc.) to execute the method of each embodiment of the present application.

The above embodiments can be implemented in whole or in part by software, hardware, firmware or any combination thereof. When implemented by software, it can be implemented in whole or in part in the form of a computer program product. The computer program product includes one or more computer instructions. When the computer program instructions are loaded and executed on the computer, the process or function according to the embodiment of the present application is generated in whole or in part. The computer can be a general-purpose computer, a special-purpose computer, a computer network, or other programmable device. The computer instructions can be stored in a computer-readable storage medium, or transmitted from one computer-readable storage medium to another computer-readable storage medium. For example, the computer instructions can be transmitted from one website, computer, server or data center to another website, computer, server or data center by wired (such as coaxial cable, optical fiber, digital subscriber line) or wireless (such as infrared, wireless, microwave, etc.) means. The computer-readable storage medium can be any available medium that can be accessed by the computer or a data storage device such as a server or data center that includes one or more available media integrated. The available medium can be a magnetic medium (such as a floppy disk, a storage disk, a tape), an optical medium (such as a DVD), or a semiconductor medium (such as a Solid State Disk (SSD)), etc.

The above are only some embodiments of the present application, and are not intended to limit the scope of the present application. Any equivalent structure or equivalent process transformation made using the contents of the specification and drawings of the present application, or directly or indirectly applied in other related technical fields, shall be similarly included in the scope of the present application.

## Claims

1. A processing method, **characterized by** comprising:
S20, in response to sending a random access preamble, performing a first preset processing, and determining whether a preset process is completed according to a preset strategy.

2. The method according to claim 1, wherein the first preset processing comprises at least one of the following:
starting a random access response window;
starting a time advance acquisition response window;
starting a switch command response window; and
not starting the random access response window.

3. The method according to claim 2, wherein determining whether the preset process is completed according to the preset strategy comprises at least one of the following:
in response to that a response message is received in the response window, determining that the preset process is completed;
in response to that the response window times out and no response message is received, determining that the preset process is not completed;
in response to that no response message is received, determining that the preset process is not completed;
in response to that the response message is received, determining that the preset process is completed; and
in response to that a trigger message is received, performing a second preset processing.

4. The method according to claim 3, wherein the response message comprises an LTM cell switch command and/or a random access response; and/or, the trigger message comprises a random access triggered by a PDCCH order; and/or, the second preset processing comprises at least one of the following:
in response to that the trigger message has the same random access preamble and/or random access index as another process being executed, no longer re-initiating the process;
in response to that the trigger message has a different random access preamble and/or synchronization signal fast index than another process being executed, determining that the process is not completed; and
determining that the random access and/or time advance acquisition process is not completed.

5. The method according to claim 1, further comprising at least one of the following:
the preset process being a random access process, or an LTM cell switch time advance acquisition process, or a time advance acquisition process;
after determining that the preset process is completed, terminating random access preamble transmission in execution;
after determining that the preset process is completed, performing next random access preamble transmission according to a backoff indicator carried by LTM cell switch command; and
after determining that the preset process fails, fallback to perform next random access preamble transmission according to a preconfigured preamble.

6. A processing method, **characterized by** comprising:
S10, sending random access indication information so that a terminal device sends a random access preamble based on the random access indication information, performs a first preset processing, and determines whether a preset process is completed according to a preset strategy.

7. The method according to claim 6, wherein the first preset processing comprises at least one of the following:
starting a random access response window;
starting a time advance acquisition response window;
starting a switch command response window; and
not starting the random access response window.

8. The method according to claim 6, further comprising:
sending a response message.

9. A communication device, **characterized by** comprising: a memory and a processor, wherein a processing program is stored in the memory, and when the processing program is executed by the processor, the processing method according to claim 1 or 6 is implemented.

10. A storage medium, **characterized in that** a computer program is stored in the storage medium, and when the computer program is executed by a processor, the processing method according to claim 1 or 6 is implemented.
